# FASCICULE DE BREVET EUROPEEN

(11) **EP 1 272 868 B1**
(45) Date de publication et mention de la délivrance du brevet: **01.09.2004**
(21) Numéro de dépôt: 01909924.1
(22) Date de dépôt: 28.02.2001
(51) Int. Cl.: G01S 1/72, G01S 5/18

(54) **EMETTEUR DE LOCALISATION SOUS-MARINE A ETALEMENT TEMPOREL ET SPECTRAL, ET PROCEDE ET INSTALLATION UTILISANT DE TELS EMETTEURS**
ZEIT- UND BANDSPREIZSENDER FÜR UNTERWASSERORTUNGSSYSTEME SOWIE SENDEVERFAHREN UND ANLAGE DAFÜR
TEMPORAL AND SPECTRAL SPREAD SUBMARINE LOCATOR TRANSMITTER, AND METHOD AND INSTALLATION USING SAME

(30) Priorité: 10.03.2000 FR 0003127
(43) Date de publication de la demande: 08.01.2003
(73) Titulaire: Architecture et Conception de Systèmes Avancés" ACSA", 13590 Meyreuil (FR)
(72) Inventeur: Thomas, Hubert, 13100 Le Tholonet (FR)
(74) Mandataire: Marek, Pierre
(86) Numéro de dépôt international: PCT/FR2001/000584
(87) Numéro de publication internationale: WO 2001/069280

(56) Documents cités:
- EP-A- 0 243 240
- US-A- 4 951 263
- US-A- 5 896 304

## Description

### 1. Objet

L'invention se rapporte au domaine de la localisation sous-marine par ondes acoustiques et a plus particulièrement pour objet les émetteurs portés par les matériels ou mobiles à localiser et éventuellement à identifier. Elle vise également un procédé et une installation comportant application de tels émetteurs.

### 2. Etat de la technique.

Différentes techniques sont mises en oeuvre en localisation sous-marine. Elles utilisent en général la propagation d'ondes acoustiques.

Une première méthode consiste à doter le mobile à localiser d'un émetteur-récepteur. Le mobile interroge à cadence régulière des balises posées au fond de la mer. La mesure des temps de propagation, aller et retour, des ondes acoustiques permet, connaissant la célérité du son dans l'eau, d'en déduire les distances mobile-balises. Les coordonnées des balises étant connues, le mobile se trouve alors localisé à l'intersection de sphères centrées sur les balises et de rayons égaux aux temps de propagation divisés par deux fois la célérité et corrigé, si nécessaire, d'un éventuel retard. Cette technique bien connue s'appelle la localisation par "Base Longue".

Des systèmes plus performants sont mis en oeuvre par des centres d'essais militaires. Ce sont, par exemple, des systèmes de trajectographie de torpilles. Ils sont fixes ou mobiles. Dans les deux cas, les points de réception des signaux acoustiques sont des hydrophones, situés soit à proximité du fond de la mer, soit suspendus à des bouées. Le brevet Européen N° 0 243 240 de la société THOMSON-CSF décrit un tel dispositif. Les mobiles à trajectographier sont dotés d'émetteurs acoustiques. Ils émettent périodiquement, par exemple, avec une récurrence de 500 ms, des trains d'impulsions choisies parmi deux fréquences (technique dite SFSK en terminologie anglo-saxonne). Le brevet US4951263 décrit un émetteur selon le préambule de la revendication 1.

D'autres émetteurs utilisés en trajectographie transmettent une première impulsion, à cadence de 1 Hz, suivie d'une impulsion décalée d'un facteur constant et d'une grandeur proportionnelle à l'immersion du mobile. Ces émetteurs peuvent disposer d'une horloge calée sur une référence de temps externe préalablement au lancement du mobile. Ils sont alors dits synchrones.

L'on connaît aussi les émetteurs acoustiques destinés à la relocalisation de boîtes noires d'aéronef abîmé en mer. Ils transmettent des impulsions de fréquence pure à 37,5 kHz qui, si elles permettent de se guider vers la source, ne rendent pas possible son identification. En effet, l'émetteur de la boîte contenant les enregistrements vocaux transmet les mêmes signaux que la boite renfermant des informations relatives aux paramètres de vol ; ce qui a pour effet de compliquer les opérations de recherche et de récupération.

Les émetteurs existants présentent de nombreuses limitations, tout particulièrement lorsque de nombreux mobiles à trajectographier sont présents simultanément dans l'eau. C'est le cas notamment s'il s'agit d'un groupe de plongeurs sous-marins. En effet, la réception simultanée, sur un même hydrophone, d'impulsions acoustiques provenant de mobiles différents pose des problèmes de détection. Parmi ceux-ci, sans que cette liste ne soit limitative, on peut citer : le mauvais ajustement des boucles de contrôle automatique de gain des préamplificateurs, les phénomènes d'interférences des ondes qui se traduisent par l'évanouissement ou la surabondance de signaux.

De plus, il convient de considérer non seulement les interférences entre les ondes directes ; mais aussi les interférences avec les multi-trajets fréquemment rencontrés par petits et moyens fonds. Ils sont liés aux réflexions multiples des signaux sur le fond et la surface de la mer.

A titre d'exemple, supposons que l'on veuille localiser une équipe de 2, 4 ou 8 plongeurs à l'aide d'un dispositif de 4 bouées situées en surface, stabilisées par ancrage, selon une configuration en carré de 1000 m de côté. Considérons que les plongeurs sont dotés d'émetteurs traditionnels et transmettent chacun sur une fréquence qui lui est propre deux impulsions acoustiques, l'une synchrone d'une référence de temps (le temps GPS par exemple), l'autre impulsion permettant de coder son immersion selon le procédé précédemment décrit. Cette impulsion étant émise avec un retard de 45 millisecondes, correspondant à une immersion de 30m par exemple. La table ci-après présente la probabilité de détecter sans interférence la première émission d'un plongeur donné sur au moins trois bouées, ce nombre étant le minimum requis pour localiser le plongeur en coordonnées X-Y sans ambiguïté.

| **Probabilité** | **Maille 5 m** | **Maille 50 m** | **Maille 500 m** | **Maille 1000 m** |
|---|---|---|---|---|
| **2 Plongeurs** | 0 % | 30 % | 95 % | 97 % |
| **4 Plongeurs** | 0 % | 2 % | 65 % | 85 % |
| **8 Plongeurs** | 0 % | 0 % | 30 % | 60 % |

En colonnes, figurent différentes tailles de maille.

Une maille de 500 m signifie que les plongeurs sont distribués de façon aléatoire dans un volume de 500 x 500 m, avec une immersion comprise entre 20 et 40 mètres.

Dans les calculs, les phénomènes de multi-trajets sont supposés créer des interférences pendant une durée de 10 millisecondes suivant la fin de l'émission d'une impulsion acoustique de durée 5 millisecondes.

La table ci-dessus démontre qu'il est très difficile de localiser des plongeurs, à cadence élevée, dès lors qu'ils sont regroupés à l'intérieur d'un petit volume et utilisent des émetteurs synchrones et une récurrence d'émission identique pour tous les plongeurs.

### 3. Problème posé

D'une façon générale, le problème posé consiste à permettre la localisation et l'identification d'un ensemble d'objets ou de mobiles sous-marins ; ce, de façon précise, sans ambiguïté et quelle que soit la position des mobiles les uns par rapport aux autres et par rapport aux hydrophones de détection. Par ailleurs, le coût de fabrication de ces émetteurs doit être faible.

### 4. - La solution selon l'invention aux problèmes posés.

Les émetteurs acoustiques de localisation objet de la présente invention sont caractérisés par le fait qu'ils possèdent des circuits électroniques de génération de signaux acoustiques impulsionnels et apériodiques, dont les dates d'émission sont réparties selon une séquence pseudo-aléatoire prédéterminée et connue, tant au niveau de l'équipement d'émission lui-même, qu'au niveau des équipements de réception ou du centre de traitement.

Selon une autre disposition caractéristique, lesdits circuits électroniques sont configurés de sorte que la séquence pseudo-aléatoire apériodique d'impulsions qu'ils génèrent, soit une suite de signaux codés par des sauts dans des bandes de fréquences larges ou étroites, selon un ordonnancement prédéterminé et connu, tant au niveau de l'équipement d'émission lui-même, qu'au niveau des équipements de réception ou du centre de traitement.

L'installation selon l'invention est remarquable par le fait qu'elle comprend : - des émetteurs aptes à générer des signaux acoustiques impulsionnels et apériodiques, rendus solidaires des matériels ou mobiles à localiser et/ou à identifier ; - un ou des points de mesure dotés d'un récepteur acoustique, d'une référence d'échelle de temps et d'un moyen de localisation dudit point de mesure ; - et un ou des centres de traitement permettant l'identification des émetteurs par des calculs de correction de niveau 2 entre une série d'instants de réception des impulsions et les séquences pseudo-aléatoires propres à chaque émetteur.

Alternativement, le(s) point(s) de mesure peut (peuvent) être fixes et préalablement localisés par tout moyen de positionnement dans un référentiel local ou géographique.

Le procédé de l'invention est remarquable en ce que l'on équipe les matériels ou mobiles à localiser et/ou à identifier, d'émetteurs acoustiques transmettant des signaux acoustiques impulsionnels apériodiques selon une séquence pseudo-aléatoire prédéterminée ; on déploie, sur la zone de travail où sont situés les matériels ou les mobiles à localiser, un ou plusieurs points de mesure dotés, chacun, d'un récepteur acoustique, d'une référence d'échelle de temps et d'un moyen de localisation dudit point de mesure ; on transmet à un centre de traitement les informations issues des points de mesure où, à chaque instant de détection sur une bande de fréquence donnée, l'on associe une datation précise dans un référentiel d'échelle de temps et une position dudit point de mesure dans un référentiel spatial ; l'ensemble de ces informations provenant de différents points de mesure étant regroupé audit centre de traitement en vue de leur exploitation par corrélation de niveau 2 avec les séquences pseudo-aléatoires de référence correspondant à chacun des émetteurs recherchés.

Alternativement, le traitement de corrélation de niveau 2 peut être effectué au niveau du (des) point(s) de mesure.

Comme il sera vu ci-après, lors de la description d'un mode de réalisation, une solution particulière au problème posé consiste à faire émettre par chaque mobile, cycliquement, une série de signaux acoustiques impulsionnels et apériodiques.

L'invention sera mieux comprise et d'autres caractéristiques apparaîtront à l'aide de la description qui suit en référence aux figures annexées.

La figure 1 représente le séquencement temporel des impulsions émises.

La figure 2 représente le synoptique d'un émetteur de signaux acoustiques impulsionnels et apériodiques.

La figure 3 représente l'étalement spatial des impulsions émises.

La figure 4 représente l'occupation temporelle des codes émis lors de l'utilisation d'émetteurs traditionnels de trajectographie utilisés en mode synchrone.

La figure 5 représente l'occupation temporelle des impulsions émises utilisant le procédé d'étalement temporel objet de la présente invention.

La figure 6 représente la clef de décodage.

Dans la table précédemment représentée figurent les probabilités de détection d'une émission acoustique en provenance d'un émetteur sur au moins trois points de réception ; ce, sans interférence, lors de l'utilisation d'émetteurs traditionnels de trajectographie utilisés en mode synchrone.

D'une manière générale, le moyen de localisation de mobiles sous-marins, mettant en oeuvre les émetteurs objet de la présente invention, est constitué d'un ensemble de points de réception largement espacés. Dans ce qui suit, nous supposerons que ces points de réception sont constitués d'hydrophones situés à la verticale de bouées. Les points de réception intègrent des électroniques de détection et de localisation dudit point de réception.

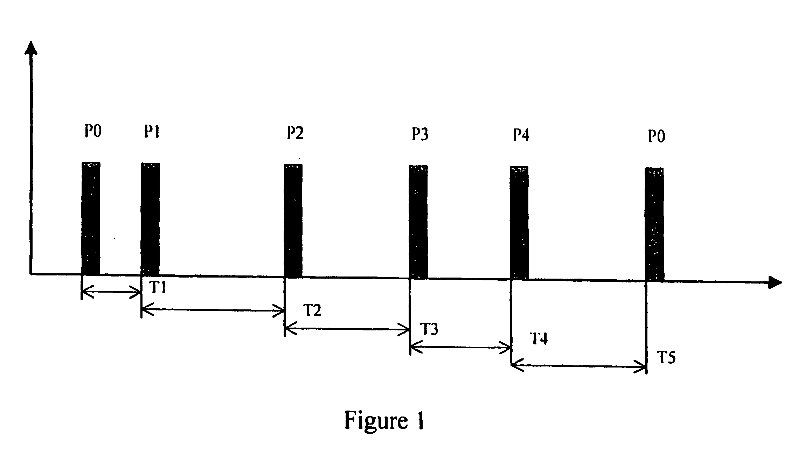

La figure 1 présente un exemple de séquencement pseudo-aléatoire d'impulsions PO à P4 à étalement temporel. Dans ce cas particulier, 5 impulsions sont émises cycliquement. Elles sont caractérisées par les intervalles de temps T1, T2 à T5 séparant chaque émission.

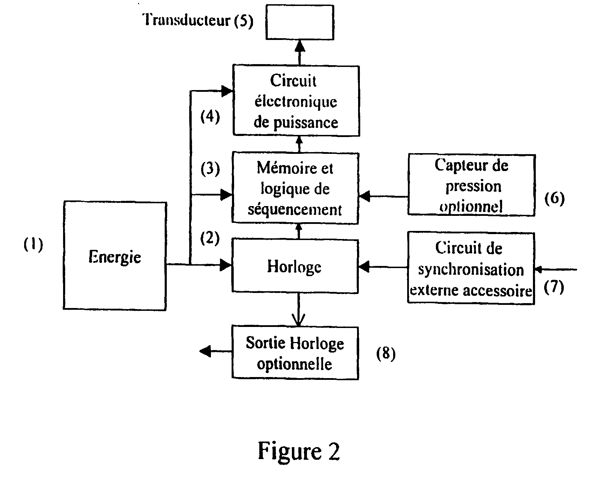

Sur la figure 2, l'on reconnaît une source d'énergie (1), par exemple, une pile, un circuit d'horloge (2), qui pourrait être un quartz, une mémoire (3) dans laquelle sont stockés ou calculés les intervalles de temps, t_{i,} séparant chaque émission et une logique servant au séquencement des dites émissions. Le circuit (4) représente l'étage d'émission de puissance qui permet de générer une tension élevée pour attaquer le transducteur d'émission (5), en général une céramique piézo-électrique. Un capteur de pression (6) peut être intégré à l'ensemble. Il sert alors à la télémesure d'immersion par entrelacement à la première séquence d'émissions d'impulsions d'une deuxième séquence exploitant un autre séquencement pseudo-aléatoire, décalé du premier d'un temps proportionnel à l'immersion du mobile. Un circuit de synchronisation externe (7) permet accessoirement de synchroniser l'horloge (2) à une référence d'échelle de temps commune partagée par l'émetteur et les récepteurs. Une sortie optionnelle (8) de la référence de temps peut être utilisée à des fins de marquage de mesures exploitée par un autre dispositif non représenté.

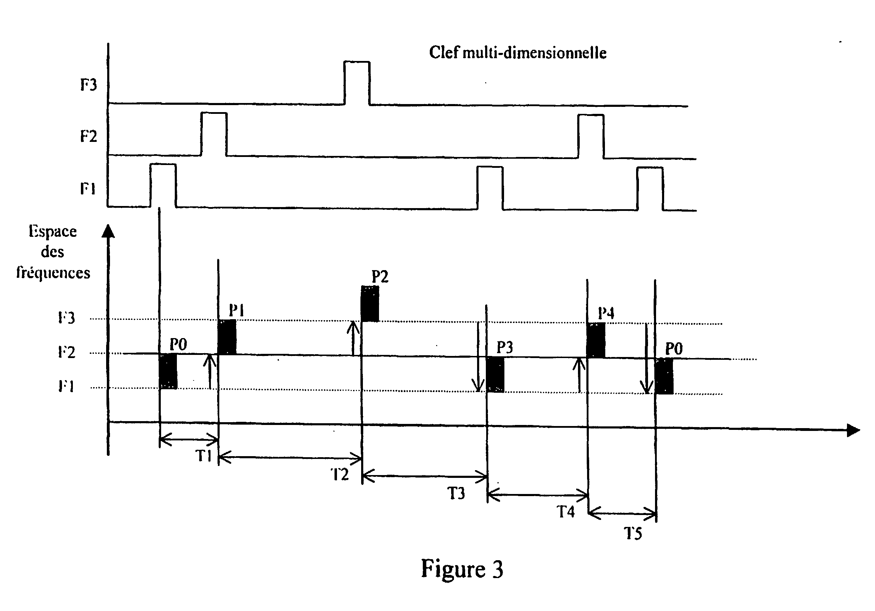

La figure 3 représente dans l'espace temps-fréquence la combinaison de l'étalement temporel des codes impulsionnels T1 à T5 et de sauts pseudo-aléatoires dans l'espace des fréquences F1 à F3. Il s'en suit un étalement des codes émis tant fréquentiel que temporel, d'où une très grande diversité sur le choix des codages. Ils sont caractérisés par une clef multidimensionnelle (temps et fréquences).

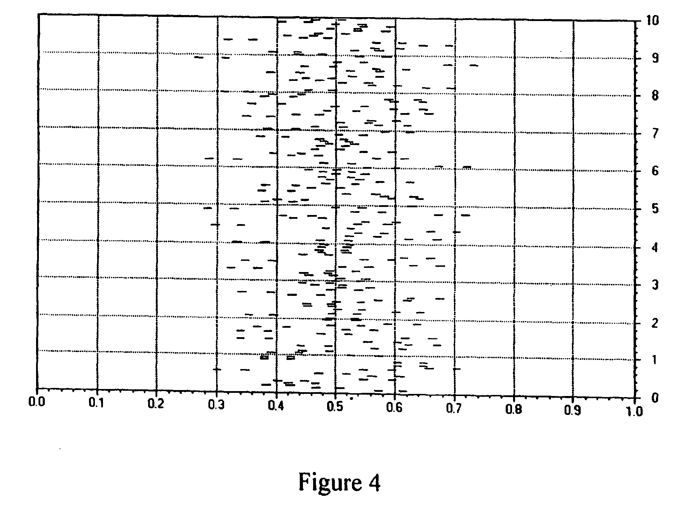

La figure 4 représente ce que serait l'occupation temporelle de signaux émis par un groupe de 4 plongeurs sous-marins s'ils évoluaient dans un carré de 500 m de coté, chacun étant doté d'un émetteur traditionnel partageant une référence de temps commune et doté d'une télémesure d'immersion. La concentration des signaux dans l'intervalle 0,3 à 0,7 seconde est la cause des collisions entre les signaux et explique la faible probabilité de détection sans interférence sur au moins trois points de mesure. L'axe horizontal de la figure représente, sur un cycle d'une seconde, les instants d'arrivée des signaux émis par les plongeurs sur 4 bouées situées aux 4 coins d'un carré de 1000 m de côté. L'axe vertical représente une succession de 10 cycles d'émissions décalés d'une seconde.

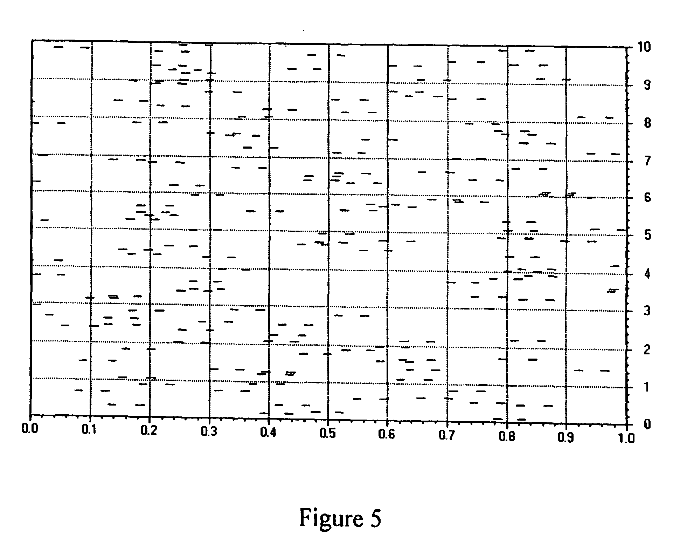

La figure 5, représentative de l'invention, montre ce que serait l'occupation temporelle de signaux impulsionnels émis par un groupe de 4 plongeurs sous-marins s'ils évoluaient dans un carré de 500 m de côté, chacun étant muni d'un émetteur selon l'invention, doté du dispositif d'étalement temporel des codes émis. Il s'en suit une répartition des codes émis sur la totalité de l'espace 0-1 sec. D'où une faible probabilité de collision des signaux au niveau des récepteurs. Les axes horizontal et vertical de cette figure ont la même signification que ceux de la figure 4.

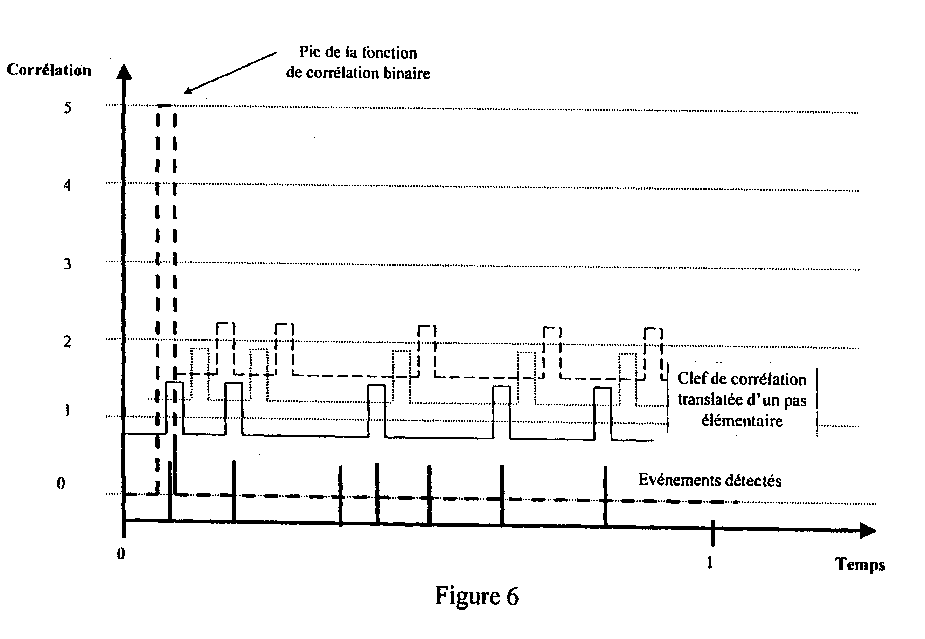

La figure 6 présente la clef de décodage correspondant à une séquence de codes impulsionnels émis par un émetteur utilisant une seule bande de fréquence. La largeur de chaque élément de la clef est déterminée pour prendre en compte les fluctuations des instants d'arrivée liées aux variations de vitesse de l'émetteur pendant la période de temps considérée. La détection s'effectue par corrélation entre la clef et les pics de détection de signaux dans la bande de fréquence considérée. La valeur de la fonction de corrélation prenant des valeurs discrètes variant de 0 à un maximum de "n" ; "n" étant le nombre maximum de codes émis pouvant être détectés à l'intérieur de la fenêtre d'observation. Cette fonction de corrélation est dite de niveau 2 par opposition à la fonction de corrélation de niveau 1 qui aurait pu être utilisée pour détecter chaque impulsion individuelle.

Sur la figure 3 est présentée une clef multidimensionnelle F1, F2, F3 correspondant à un codage aussi étalé en 3 bandes de fréquences distinctes.

De l'utilisation des émetteurs acoustiques transmettant des signaux impulsionnels apériodiques selon une séquence pseudo-aléatoire prédéterminée objet de la présente invention, il ressort les avantages suivants :

La fabrication des émetteurs ayant la capacité de transmettre des signaux impulsionnels apériodiques est, compte tenu des technologies de composants électroniques, tels les PICS, une solution de faible coût.

En figeant dans une mémoire non volatile de chaque émetteur, une séquence pseudo-aléatoire différente, il est alors très facile au niveau du récepteur aussi bien d'identifier l'émetteur que de dater l'instant de réception d'une série de codes par rapport à une référence temporelle ; ce, sans ambiguïté ni de numéro de cycle, ni d'origine de la source. Ce qui n'est absolument pas le cas aujourd'hui avec les émetteurs de boîtes noires d'aéronefs qui transmettent sur la même fréquence et avec la même périodicité. De cette caractéristique unique, il ressort la possibilité intéressante de différentier les émetteurs et donc le bien auquel il se trouve rattaché. Ceci peut s'avérer utile pour distinguer des biens qui seraient perdus au fond de la mer (Containers de produits chimiques dangereux, matière nucléaire, armes, ...) et donc en permettre la récupération avec des priorités différentes.

La probabilité pour qu'un pic de la fonction de corrélation de niveau 2 ne corresponde pas au mobile sélectionné est extrêmement faible. Il s'ensuit une excellente probabilité de détection simultanée sur plusieurs points de réception des séquences pseudo-aléatoires d'impulsions correspondant à un grand nombre de mobiles présents dans une zone donnée, même si la dite zone est de faibles dimensions.

Du fait du très grand nombre de séquences pseudo-aléatoires différentes qui peuvent être générées, il ressort que la détection d'un bruit en lieu et place d'un signal réel, aussi bien que la non-détection d'un signal réel, ont une influence faible sur le résultat du calcul de la fonction de corrélation de niveau 2. Il s'ensuit une grande insensibilité au bruit ambiant, au leurrage, tout comme au brouillage volontaire.

De plus, en agissant sur le seul aspect apériodique des émetteurs, il devient possible de faire évoluer les matériels de recherche tout en gardant une compatibilité avec les équipements existant de relocalisation basés sur les mesures purement directionnelles.

### 5. Mise en oeuvre du procédé de localisation et d'identification

On rend les matériels à localiser et/ou à identifier solidaires d'émetteurs acoustiques, transmettant des signaux impulsionnels apériodiques selon une séquence pseudo-aléatoire prédéterminée.

On déploie, sur la zone de travail où sont situés les matériels à localiser, un ou plusieurs points de mesure dotés d'un récepteur acoustique, d'une référence d'échelle de temps et d'un moyen de localisation dudit point de mesure ; les points de mesure et/ou le ou les centres de traitements sont disposés en surface. ou en pleine eau, ou au fond de la mer, de manière fixe, ou dérivante, ou mobile.

On transmet à un centre de traitement les informations issues des points de mesure où, à chaque instant de détection sur un canal de l'arrivée d'une impulsion (représenté par une bande de fréquence donnée), on associe une datation précise dans un référentiel d'échelle de temps et une position du dit point de mesure dans un référentiel spatial.

L'ensemble de ces informations provenant de différents points de mesure sont regroupées audit centre de traitement en vue de leur exploitation par corrélation de niveau 2 avec les séquences pseudo-aléatoires de référence correspondant à chacun des émetteurs recherchés.

La seule existence d'un maximal de la fonction de corrélation de niveau 2, telle que précédemment définie, supérieur à un seuil donné permet, à la fois de s'assurer de la présence de l'émetteur sur la zone ; mais aussi de son identification.

Au pic de chaque fonction de corrélation de niveau 2, correspond un temps de propagation des signaux émis en direction du récepteur.

En s'appuyant sur l'ensemble des temps de propagation des signaux corrélés sur différents récepteurs correspondant à un même cycle d'émissions, il est alors possible de calculer la position du mobile en utilisant des algorithmes de localisation bien connus dits "circulaires" ou "hyperboliques", selon que la référence d'échelle de temps de l'émetteur est synchrone ou non de la référence d'échelle de temps des récepteurs.

Ainsi, la position des émetteurs peut être déterminée avec précision, sans ambiguïté.

## Revendications

1. Emetteurs acoustiques de localisation **caractérisés en ce qu'**ils possèdent des circuits électroniques de génération de signaux acoustiques impulsionnels et apériodiques (P0-P4), dont les dates d'émission sont réparties selon une séquence pseudo-aléatoire prédéterminée et connue tant au niveau de l'équipement d'émission lui-même, qu'au niveau des équipements de réception ou du centre de traitement.

2. Emetteurs acoustiques de localisation selon la revendication 1 **caractérisés en ce qu'**ils possèdent des circuits électroniques tels que la séquence pseudo-aléatoire apériodique de signaux impulsionnels qu'ils génèrent soit une suite de signaux impulsionnels codés par des sauts dans des bandes de fréquences larges ou étroites, selon un ordonnancement prédéterminé et connu tant au niveau de l'équipement d'émission lui-même, qu'au niveau des équipements de réception ou du centre de traitement.

3. Emetteurs acoustiques de localisation selon l'une des revendications 1 ou 2, **caractérisés en ce qu'**ils disposent de circuits électroniques permettant de transmettre une ou plusieurs séquences d'impulsions entrelacées en vue de la télétransmission de l'immersion du mobile ou de toute autre information.

4. Installation de localisation sous-marine comprenant des émetteurs acoustiques de localisation selon l'une quelconque des revendications 1 à 3, rendus solidaires des matériels ou mobiles à localiser et/ou à identifier, **caractérisée en ce qu'**elle comporte un ou des points de mesure dotés d'un récepteur acoustique, d'une référence d'échelle de temps et d'un moyen de localisation dudit point de mesure, et un ou des centres de traitement permettant l'identification des émetteurs par des calculs de corrélation de niveau 2 entre une série d'instants de réception des signaux impulsionnels et les séquences pseudo-aléatoires propres à chaque émetteur.

5. Installation de localisation selon la revendication 4, **caractérisée en ce que** les points de mesure sont situés en surface, en pleine eau ou disposés sur le fond de la mer, fixes, dérivants ou mobiles.

6. installation de localisation selon la revendication 4, **caractérisée en ce que** les points de mesure sont fixes et de position déterminée par tout moyen de localisation dans un référentiel local ou géographique.

7. Procédé de localisation sous-marine à étalement temporel et spectral, **caractérisé en ce que** l'on équipe les matériels ou mobiles à localiser et/ou à identifier, d'émetteurs acoustiques transmettant des signaux acoustiques impulsionnels et apériodiques (P0-P4) selon une séquence pseudo-aléatoire prédéterminée ; on déploie, sur la zone de travail où sont situés les matériels ou les mobiles à localiser, un ou plusieurs points de mesure dotés, chacun, d'un récepteur acoustique, d'une référence d'échelle de temps et d'un moyen de localisation dudit point de mesure ; on transmet à un centre de traitement les informations issues des points de mesure où, à chaque instant de détection sur une bande de fréquence donnée, l'on associe une datation précise dans un référentiel d'échelle de temps et une position dudit point de mesure dans un référentiel spatial ; l'ensemble de ces informations provenant de différents points de mesure étant regroupé audit centre de traitement en vue de leur exploitation par corrélation de niveau 2 avec les séquences pseudo-aléatoires d'impulsions de référence correspondant à chacun des émetteurs recherchés.

8. Procédé de localisation sous-marine selon la revendication 7, **caractérisé en ce que** l'on dispose les points de mesure et/ou le ou les centres de traitement en surface, en pleine eau, ou sur le fond de la mer, de façon fixe, dérivante ou mobile.

9. Procédé de localisation sous-marine suivant la revendication 7, **caractérisé en ce que** la corrélation de niveau 2 est effectuée au point de mesure ou au centre de traitement.

## Patentansprüche

1. Akustische Sender zur Ortung,
**dadurch gekennzeichnet, dass** sie elektronische Schaltkreise zum Erzeugen von akustischen gepulsten und aperiodischen Signalen (P0 - P4) besitzen, deren Sendezeitpunkte nach einer vorgegebenen Sequenz verteilt sind, die pseudozufallsbedingt ist und sowohl auf der Ebene der Sendeeinrichtung selbst als auch auf der Ebene der Empfangseinrichtungen oder des Verarbeitungszentrums bekannt ist.

2. Akustische Sender zur Ortung nach Anspruch 1,
**dadurch gekennzeichnet, dass** sie solche elektronische Schaltkreise besitzen, dass die pseudo-zufallsbedingte aperiodische Sequenz von gepulsten Signalen, die sie erzeugen, eine Abfolge von gepulsten Signalen ist, die durch Sprünge in den Breitband- oder Schmalbandfrequenzen nach einer vorgegebenen Steuerung, die sowohl auf der Ebene der Sendeeinrichtung selbst als auch auf der Ebene der Empfangserinrichtungen oder des Verarbeitungszentrums bekannt sind, codiert werden.

3. Akustische Sender zur Ortung nach einem der Ansprüche 1 oder 2,
**dadurch gekennzeichnet, dass** sie über elektronische Schaltkreise verfügen, die es ermöglichen, eine oder mehrere verschachtelte Impulssequenzen hinsichtlich der Fernübertragung des Untertauchens des in Bewegung befindlichen Körpers oder jeder anderen Information zu übertragen.

4. Unter Wasser befindliche Ortungsinstallation, umfassend akustische Sender zur Ortung nach einem der Ansprüche 1 bis 3, die mit zu ortenden und/oder zu identifizierenden Betriebsmitteln oder in Bewegung befindlichen Körpern fest verbunden sind,
**dadurch gekennzeichnet, dass** sie einen oder mehrere Messpunkte aufweist, die mit einem akustischen Empfänger, einer Bezugs-Zeitskala und einem Ortungsmittel des Messpunkts und einem oder mehreren Verarbeitungszentren ausgestattet sind, welche die Identifizierung der Sender durch Korrelationsberechnungen der zweiten Ebene zwischen einer Reihe von Empfangszeitpunkten von gepulsten Signalen und den jedem Sender eigenen pseudo-zufallsbedingten Sequenzen ermöglichen.

5. Ortungsinstallation nach Anspruch 4,
**dadurch gekennzeichnet, dass** die Messpunkte auf der Oberfläche, mitten im Wasser oder auf dem Meeresgrund fest, driftend oder beweglich angeordnet liegen.

6. Ortungsinstallation nach Anspruch 4,
**dadurch gekennzeichnet, dass** die Messpunkte feststehend sind und eine Position aufweisen, die mit jedem Ortungsmittel in einem lokalen oder geografischen Bezugssystem vorgegeben werden kann.

7. Verfahren zur Unterwasserortung mit temporärer und spektraler Streuung,
**dadurch gekennzeichnet, dass** die zu ortenden und/oder zu identifizierenden Betriebsmittel oder in Bewegung befindlichen Körper mit akustischen Sendern ausgestattet werden, die akustische gepulste und aperiodische Signale (P0 - P4) gemäß einer vorgegebenen pseudo-zufallsbedingten Sequenz übertragen; über dem Arbeitsbereich, in dem sich die zu ortenden Betriebsmittel oder die in Bewegung befindlichen Körper befinden, ein oder mehrere Messpunkte verteilt werden, die jeweils mit einem akustischen Empfänger, einer Bezugs-Zeitskala und einem Ortungsmittel des Messpunkts ausgestattet sind; an ein Verarbeitungszentrum die Informationen übertragen werden, die von den Messpunkten ausgegeben werden, an denen bei jedem Erfassungsmoment auf einem vorgegebenen Frequenzband der genaue Zeitpunkt in einem Zeitskalen-Bezugssystem und eine Position des Messpunkts in einem räumlichen Bezuassvstem miteinander verknüpft werden; die Gesamtheit dieser Informationen, die von verschiedenen Messpunkten stammen, in dem Verarbeitungszentrum hinsichtlich ihrer Auswertung durch Korrelation auf der 2. Ebene mit den pseudo-zufallsbedingten Referenzimpuls-Sequenzen, die jedem der gesuchten Sender entsprechen, zusammengefasst werden.

8. Verfahren zur Unterwasserortung nach Anspruch 7,
**dadurch gekennzeichnet, dass** man die Messpunkte und/oder die Verarbeitungszentren an der Oberfläche, mitten im Wasser oder auf dem Boden des Meeres feststehend, driftend oder beweglich anordnet.

9. Verfahren zur Unterwasserortung nach Anspruch 7,
**dadurch gekennzeichnet, dass** die Korrelation auf 2. Ebene am Messpunkt oder im Verarbeitungszentrum ausgeführt wird.

## Claims

1. Acoustic tracking transmitters, **characterized in that** they have electronic circuits that generate aperiodic acoustic pulsed signals (PO-P4), the transmission dates of which are distributed according to a known, predetermined pseudo-random sequence, both at the transmission equipment itself, as well as at the receiving equipment or processing center.

2. Acoustic tracking transmitters according to claim 1, **characterized in that** they have electronic circuits so that the aperiodic pseudo-random sequence of pulsed signals they generate is a sequence of pulsed signals encoded by hops in wide or narrow frequency bands, according to an order that is predetermined and known both at the transmission equipment itself, as well as at the receiving equipment or processing center.

3. Acoustic tracking transmitters according to either of claims 1 or 2, **characterized in that** they have electronic circuits that enable one or more sequences of interleaved sequences of pulses to be transmitted for purposes of the remote transmission of the depth of the mobile unit or any other information.

4. Underwater tracking facility comprising acoustic tracking transmitters according to any of claims 1 to 3, integrated into equipment or mobile units to be tracked and/or identified, **characterized in that** it has one or more points of measurement provided with an acoustic receiver, a time scale reference and a means of tracking said point of measurement, and one or more processing centers that make it possible to identify the transmitters by level 2 correlation calculations between a series of moments of reception of pulsed signals and the pseudo-random sequences peculiar to each transmitter.

5. Tracking facility according to claim 4, **characterized in that** the points of measurement are situated on the surface, immersed in the water or placed at the bottom of the ocean, fixed, drifting, or movable.

6. Tracking facility according to claim 4, **characterized in that** the points of measurement are fixed and of a position determined by any means of tracking in a local or geographic referential system.

7. Underwater tracking method by temporal and spectral spread, **characterized in that** the equipment or mobile units to be tracked and/or identified are equipped with acoustic transmitters transmitting aperiodic pulsed acoustic signals (PO-P4) according to a predetermined pseudo-random sequence; in the work area where the equipment or mobile units to be tracked are located, one or more points of measurement are deployed, each of which points is provided with an acoustic receiver, a time scale reference and a means of tracking said point of measurement; the information produced by the points of measurement is transmitted to a processing center where, at each moment of detection on a given frequency band, it is associated with a precise dating in a time scale referential system and a position of said point of measurement in a spatial referential system; all of this information from different points of measurement is collected at said processing center so that it can be processed by level 2 correlation with the reference pseudo-random sequences of pulses pertaining to each of the transmitters being sought.

8. Underwater tracking method according to claim 7, **characterized in that** the points of measurement and/or the processing center(s) are arranged on the surface, immersed in the water, or at the bottom of the ocean, fixed, drifting, or movable.

9. Underwater tracking method according to claim 7, **characterized in that** the level 2 correlation is performed at the point of measurement or at the processing center.
